(19) Europäisches Patentamt

European Patent Office

Office européen des brevets

(11) EP 1 729 260 A2

(12) **EUROPEAN PATENT APPLICATION**

(43) Date of publication:
06.12.2006 Bulletin 2006/49

(51) Int Cl.:
*G06T 7/20* (2006.01)

(21) Application number: 06252845.0

(22) Date of filing: 01.06.2006

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK YU

(30) Priority: 01.06.2005 JP 2005161438

(71) Applicant: Nissan Motor Company Limited
Kanagawa-ku
Yokohama-shi, Kanagawa 221-0023 (JP)

(72) Inventor: Sano, Yasuhito
Yokohama-shi
Kanagawa, 221-0023 (JP)

(74) Representative: Holmes, Matthew William
Nissan Technical Centre Europe
Intellectual Property Department
Cranfield Technology Park
Bedfordshire, MK43 0DB (GB)

(54) **Behaviour detection**

(57) A behaviour detector and a behaviour detection method for a vehicle. A controller extracts multiple characteristic points out of an image captured using a camera and computes the velocities and the directions that the respective extracted characteristic points move in the image. Then, the controller computes the times (TTC) until vehicle collision with the respective characteristic points based on the computed velocities and the directions that the respective extracted characteristic points move in the image. Distant characteristic points are designated based on the computed TTCs, and movements of the distant characteristic points are monitored in order to detect pitching and yawing of the vehicle.

FIG. 1

EP 1 729 260 A2

## Description

The present invention pertains to behaviour detection and particularly, but not exclusively, to a behaviour detection apparatus and method for a vehicle. Aspects of the invention also relate to a detector and to a vehicle.

An approach detector is known from, for example, Japanese Kokai Patent Application No. 2003-51016. According to the approach detector taught therein, because an image captured in front of a vehicle shows little movement near the optical axis of a camera due to the forward movement of the vehicle, swaying of the image near the optical axis is detected in order to detect changes in the behaviour of the vehicle associated with the occurrence of yawing or pitching.

It is an aim of the invention to improve upon such known technology. Other aims and advantages of the invention will become apparent from the following description, claims and drawings.

Aspects of the invention therefore provide and apparatus, a method and a vehicle as claimed in the appended claims.

According to another aspect of the invention there is provided a behaviour detector for a vehicle comprising an image pickup device for sequentially capturing a plurality of images outside the vehicle and a controller operable to extract characteristic points from each of the plurality of images, to compute movement information for the characteristic points moving through the plurality of images, to compute a time until collision of the vehicle with each of the characteristic points based on the movement information, and to designate certain of the characteristic points at distant positions from the vehicle as distant characteristic points using the respective times until collision; and wherein movements of the distant characteristic points indicate behaviour of the vehicle.

In an embodiment, the controller is further operable to separate characteristic points with identical times until collision into groups, to designate characteristic points having a time until collision equal to or greater than a prescribed value out of the groups as candidates for the distant characteristic points; and to delete nearby characteristic points for objects present near the vehicle from the candidates; and wherein remaining ones of the candidates are the distant characteristic points.

In an embodiment, the nearby characteristic points comprise characteristic points present within a prescribed range from a bottom end of the image that are candidates.

In an embodiment, the nearby characteristic points further comprise other candidates having the same movement information as the characteristic points present within the prescribed range from the bottom of the image that are candidates.

In an embodiment, the controller is further operable to determine movement information for characteristic points present within a prescribed range from a bottom end of an image and to determine movement information for characteristic points in an upper end of an image; and wherein the nearby characteristic points deleted include characteristic points present within the prescribed range from the bottom end of the image when the movement information for the characteristic points is not equal to the movement information for the characteristic points in the upper end of the image and wherein the nearby characteristic points deleted include the characteristic points present within the prescribed range from the bottom end of the image and the characteristic points in the upper end of the image when the movement information for the characteristic points present within the prescribed range from the bottom end of the image is equal to the movement information for the characteristic points in the upper end of the image.

In an embodiment, the behaviour comprises at least one of a pitch and a yaw of the vehicle.

In an embodiment, the movement information comprises at least one of a velocity and a direction for each of the characteristic points.

According to a further aspect of the invention there is provided a behaviour detector for a vehicle, comprising pickup means for capturing images external of the vehicle, characteristic point extraction means for extracting characteristic points out of images captured by the pickup means, velocity information computation means for computing pieces of velocity information regarding each of the characteristic points extracted by the characteristic point extraction means, time-until-collision computation means for computing respective times until vehicle collision with each of the characteristic points based on the pieces of velocity information computed by the velocity information computation means and designation means for designating characteristic points present at distant positions from the vehicle based on the respective times computed by the times-until-collision computation means wherein vehicular behaviour is based on movements of the distant characteristic points designated by the designation means.

The designation means may comprise means for separating characteristic points with identical time-until-collision into groups, means for designating characteristic points showing times-until-collision equal to or greater than a prescribed value out of the groups as candidates for the distant characteristic points; and means for deleting nearby characteristic points for objects present near the vehicle from the candidates wherein remaining ones of the candidates are the distant characteristic points.

In an embodiment, the means for deleting nearby characteristic points comprises designating characteristic points present within a prescribed range from the bottom end of the image that are candidates as the nearby characteristic points.

In an embodiment, the designation means comprises means for designating other candidates having the same pieces of velocity information as the nearby characteristic points as nearby characteristic points.

The vehicular behaviour may comprise at least one of a pitch and a yaw of the vehicle.

In an embodiment, the pieces of velocity information comprise at least one of a velocity and a direction for each of the characteristic points.

According to a still further aspect of the invention there is provided a behaviour detection method for a vehicle, comprising sequentially capturing a plurality of images outside the vehicle, extracting characteristic points from each of the plurality of images, computing movement information for the characteristic points moving through the plurality of images, computing a time until collision of the vehicle with each of the characteristic points based on the movement information and designating certain of the characteristic points at distant positions from the vehicle as distant characteristic points using the respective times until collision; and wherein movements of the distant characteristic points indicate behaviour of the vehicle.

In an embodiment, designating certain of the characteristic points as distant characteristic points comprises separating the characteristic points having a same time until collision into respective groups, selecting at least one of the respective groups as a distant candidate group wherein the at least one of the respective groups has a time until collision equal to or greater than a prescribed value, and deleting characteristic points for objects present near the vehicle from the distant candidate group and wherein the remaining characteristic points of the distant candidate group are the distant characteristic points.

In an embodiment, deleting characteristic points for objects present near the vehicle from the distant candidate group comprises deleting characteristic points present within a prescribed range from a bottom end of an image from the distant candidate group.

The method may comprise deleting characteristic points having a same movement information as the characteristic points present within the prescribed range from the bottom end of the image from the distant candidate group.

The method may comprise determining movement information for nearby characteristic points present within a prescribed range from a bottom end of an image and determining movement information for characteristic points in an upper end of an image. Deleting characteristic points for objects present near the vehicle from the distant candidate group may comprise deleting the nearby characteristic points when the movement information for the nearby characteristic points is not equal to the movement information for the characteristic points in the upper end of the image and deleting the nearby characteristic points and the characteristic points in the upper end of the image when the movement information for the nearby characteristic points is equal to the movement information for the characteristic points in the upper end of the image.

A behaviour detector for a vehicle may include, by example, an image pickup device for sequentially capturing a plurality of images outside the vehicle and a controller. The controller may be operable to extract characteristic points from each of the plurality of images, to compute movement information for the characteristic points moving through the plurality of images, to compute a time until collision of the vehicle with each of the characteristic points based on the movement information, and to designate certain of the characteristic points at distant positions from the vehicle as distant characteristic points using the respective times until collision. Movements of the distant characteristic points may be used to indicate behaviour of the vehicle.

A behaviour detection method for a vehicle can include, for example, sequentially capturing a plurality of images outside the vehicle, extracting characteristic points from each of the plurality of images, computing movement information for the characteristic points moving through the plurality of images, computing a time until collision of the vehicle with each of the characteristic points based on the movement information, and designating certain of the characteristic points at distant positions from the vehicle as distant characteristic points using the respective times until collision. Movements of the distant characteristic points indicate behaviour of the vehicle.

In an embodiment, for example, a controller extracts multiple characteristic points out of an image captured using a camera and computes the velocities and the directions that the respective extracted characteristic points move in the image. Then, the controller computes the times (TTC) until vehicle collision with the respective characteristic points based on the computed velocities and the directions that the respective extracted characteristic points move in the image. Distant characteristic points are designated based on the computed TTCs, and movements of the distant characteristic points are monitored in order to detect pitching and yawing of the vehicle.

It is envisaged within the scope of this application that the various aspects, embodiments and alternatives set out in the preceding paragraphs, in the claims and in the following description may be taken individually or in any combination thereof.

The present invention will now be described, by way of example only, with reference to the accompanying drawings in which:

Figure 1 is a block diagram showing an example configuration for implementing a vehicular behaviour detector;

Figure 2 is a diagram showing an example of detection results of characteristic points in an image;

Figure 3 is a graph showing the relationship among a vanishing point, a positional vector of a characteristic point in the image, a focal point of camera, a distance to the characteristic point in real space, and a positional vector of the characteristic point in real space;

Figure 4 is a diagram showing an example in which characteristic points with the same time to collision are extracted from an image;

Figure 5 is a diagram showing an example in which a distant candidate group is extracted from an image;

Figure 6 is a diagram showing an example in which nearby characteristic points are deleted from a distant candidate group;

Figure 7 is a diagram showing an example in which movement of a distant characteristic point is measured in order to detect pitching and yawing of the vehicle; and

Figure 8 is a flow chart showing the processing carried out by a vehicular behaviour detector.

In the approach described above, because swaying of the image near the optical axis of the camera is detected, even if a moving object is present near the optical axis of the camera while the behaviour of the moving object changes, it can be mistakenly detected as a change in the behaviour of the vehicle.

In contrast herein, multiple characteristic points are extracted from an image captured by pickup means, pieces of velocity information regarding the respective extracted characteristic points are computed, the times until vehicle collision with the respective characteristic points are computed based on the computed pieces of velocity information on the image. Characteristic points present at a prescribed distance or farther away from the vehicle are designated as distant characteristic points based on these times until collision, and movements of the distant characteristic points are monitored in order to detect behavioural changes of the vehicle. Accordingly, changes in vehicle behaviour, such as pitching and yawing of a vehicle, can be detected very accurately without being affected by changes in the behaviour of a nearby moving object.

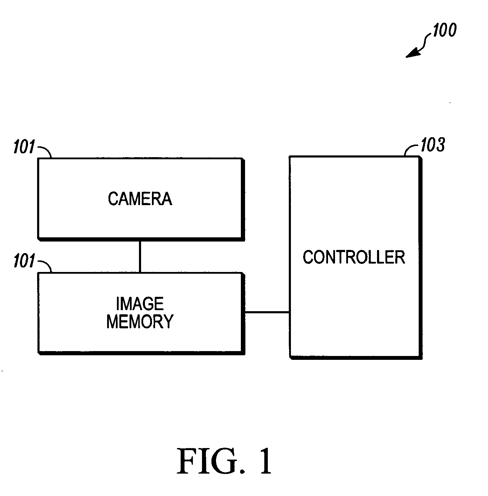

Features of the vehicular behaviour detector taught herein can be explained with reference to the drawing figures. Figure 1 is a block diagram showing an example configuration for implementing the vehicular behaviour detector. Vehicular behaviour detector 100 is mounted on a vehicle. It includes camera 101 for capturing, or picking up, an image in front of the vehicle, image memory 102 for storing the image captured by camera 101 and a controller 103, which includes generally a CPU, a memory and other peripheral circuits. The controller 103 executes various image processing functions such a detecting characteristic points, computing image velocity, computing time-until-collision, designating characteristic points and detecting behaviour as to be described in more detail hereinafter.

Camera 101 can be a high-speed camera equipped with a pickup element such as a CCD or a CMOS, whereby it continuously captures images outside the vehicle at fixed small time intervals $\Delta t$, for example, at 2 ms intervals, and outputs an image to image memory 102 for each frame.

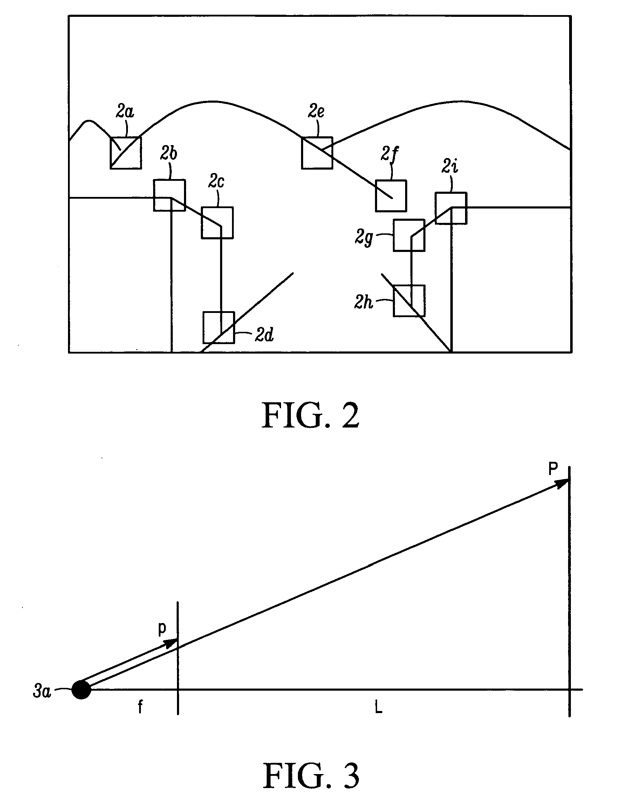

Controller 103 applies image processing to the image (i.e., the pickup image) captured by camera 101 in order to detect pitching and yawing of the vehicle. First, it applies edge extraction processing to the pickup image in order to detect end-points of the extracted edges as characteristic points. That is, it detects points where the edges are disconnected in all the edges extracted within the pickup image in order to detect prescribed ranges of areas that include these points as characteristic points. As a result, as shown in Figure 2, characteristic points 2a through 2i can be detected within the pickup image.

Detection of characteristic points is carried out for each image frame captured at fixed time intervals $\Delta t$ in order to track detected characteristic points 2a through 2i. In the present embodiment, characteristic points 2a through 2i are tracked by means of the known sum of absolute difference (SAD) technique. That is, the following processing is carried out. First, the positions where detected characteristic points 2a through 2i are present on the image are stored as a template into a memory of controller 103. Then, when characteristic point 2a is to be tracked, for example, an area with a minimum difference in brightness from that of characteristic point 2a in the template is sought in those pickup images input continuously around the position in the image where characteristic point 2a was present in the previous image.

If an area with a minimum difference in brightness from that of characteristic point 2a in the template is found as a result, tracking is pursued, assuming that characteristic point 2a in the previous image has moved to the detected area. However, if no area with a minimum difference in brightness from that of characteristic point 2a in the template is found, a decision is made that characteristic point 2a has vanished from the pickup image. Characteristic points 2a through 2i can be tracked by executing this processing with respect to all the characteristic points contained in the template.

In the meantime, the characteristic points 2a through 2i are simultaneously detected in the current image. If a new characteristic point other than the characteristic points being tracked from the previous image is detected, the new characteristic point is used as a tracking target in the next image frame. To this end, the positions of the respective characteristic points tracked from the previous image and the position of the newly-detected characteristic point in the current image are stored as a template in the memory of controller 103.

Pieces of velocity information regarding the characteristic points tracked in this manner, namely the moving speed (image velocity) and the moving direction (velocity direction), are computed. That is, the direction and the amount of movement of the characteristic points in the image are computed based on the positions of the characteristic points in the previous image and the positions of the characteristic points in the current image. When the pickup image is expressed in the form of an XY coordinate system, for example, the amount of movement can be computed based on the change in the coordinate values. Then, the image velocities of the characteristic points can be computed by dividing the computed amount of the movement of the characteristic points by the pickup time interval ($\Delta t$) of camera 101, and the velocity directions can be computed based on the changes in the coordinate values.

Next, the respective characteristic points are grouped into multiple characteristic points with the same time to collision (TTC), that is, the time until vehicle collision with the points. As described herein, the grouping of characteristic points with the same TTC is realized by taking advantage of the tendency for the image velocities of the characteristic points in the image to be proportional to the distances between the characteristic points and their vanishing points, and for the velocity directions to be equal to the directional vectors from the vanishing points to the characteristic points while the vehicle is traveling forward.

In other words, as shown in Figure 3, assume the vanishing point is denoted by 3a, the positional vector of a characteristic point in an image is denoted by p, the focal distance of camera 101 is denoted by f, the distance to the characteristic point in real space is denoted by L, and the positional vector of the characteristic point in real space is denoted by P. In this case, the following relational expression given as Formula (1) holds.

$$p = (f/L)\,P \qquad\qquad (1)$$

The image velocity of characteristic point p can be expressed by Formula (2) given below by differentiating Formula (1) by time t.

$$dp/dt = f\,v\,P\,/\,L^2 = (v/L)\,p \qquad\qquad (2)$$

It is clear from Formula (2) that the image velocity of characteristic point p is proportional to the size of positional vector P, and the velocity direction is equal to the direction of vector p.

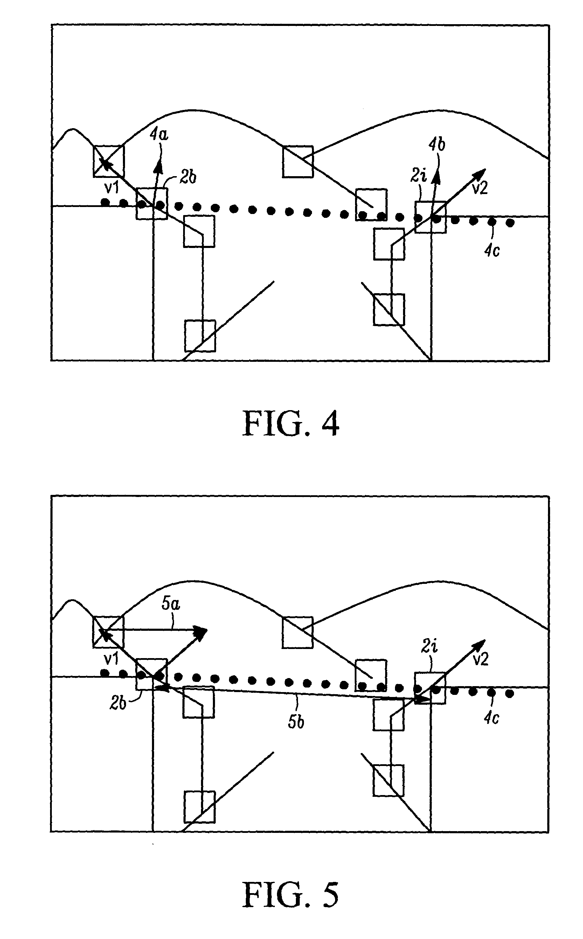

Using this tendency, a set comprising two characteristic points with the same TTC is extracted from the respective characteristic points. More specifically, the following processing is carried out. As shown in Figure 4, assume velocity vectors computed based on the image velocities of characteristic point 2b (with positional vector p1) and characteristic point 2i (with positional vector p2) and their velocity directions are denoted by v1 and v2, for example. The velocity vectors v1 and v2 can be expressed by Formulas (3) and (4) given below by applying common variable $\alpha$ to Formula (2).

$$v1 = \alpha\,p1 \qquad\qquad (3)$$

$$v2 = \alpha\,p2 \qquad\qquad (4)$$

When the difference between the velocity vectors at the two characteristic points is computed using Formulas (3) and (4), Formula (5) given below emerges.

$$v2 - v1 = \alpha\,(p2 - p1) \qquad\qquad (5)$$

As such, when variable $\alpha$ equivalent to (v/L) in Formula (2) is common to Formulas (3) and (4), that is, when characteristic point 2b and characteristic point 2i are both present at the same distance from the vehicle, and their relative velocities with respect to the vehicle are the same, the difference in the velocity vectors v2 — v1 is parallel to the vector that connects the two characteristic points 2b and 2i.

In this manner, a set of characteristic points with common variable $\alpha$, that is, v/L, can be extracted from all the 2-characteristic point sets present in the image by extracting a set in which the difference between the velocity vectors of the two characteristic points is parallel to the vector connecting the two points. Here, because v/L is obtained by dividing the distances between the vehicle and characteristic point 2b and characteristic point 2i in real space by their relative velocities with respect to the vehicle, v/L indicates the times until vehicle collision with characteristic point 2b and characteristic point 2i, that is, the TTCs. Therefore, two characteristic points with the same $\alpha$ can be determined to be a set of characteristic points with the same TTC, and the characteristic points in the set in which the difference between the velocity vectors of the two characteristic points is parallel to the vector connecting the two points can be determined to be a set comprising two characteristic points with the same TTC.

In order to extract a set in which the difference between the velocity vectors of two characteristic points is parallel to the vector connecting the two points, as shown in Figure 4, vector 4c connecting the two characteristic points and velocity vectors 4a and 4b in the perpendicular direction at the two characteristic points are computed. When the sizes of velocity vectors 4a and 4b in the perpendicular direction match, the two characteristic points, here 2b and 2i, are determined to have the same TTC, and a group of two characteristic points with the same TTC is obtained. This processing is applied to all the 2-characteristic point sets in order to divide them into multiple groups comprising characteristic points with the same TTCs.

Next, out of the characteristic point groups with the same TTCs that were obtained through this processing, a group of characteristic points present at a prescribed distance or farther away from the vehicle, that is, a distant candidate group, is extracted as target characteristic points to be monitored in order to detect pitching and yawing of the vehicle. In general, because the farther away the TTC is from the vehicle, the greater it becomes, a distant candidate group is extracted in the following manner.

Difference v2 - v1 between the velocity vectors of characteristic point 2b and characteristic point 2i expressed in Formula (5) can be expressed using Formula (6) given below, based on the content described above, and this can be further modified into Formula (7).

$$v2 - v1 = v / L\,(p2 - p1) \qquad\qquad (6)$$

$$v2 - v1 = (p2 - p1) / TTC \qquad\qquad (7)$$

The difference between the velocity vectors of characteristic point 2b and characteristic point 2i with the same relative velocity with respect to the vehicle is the value obtained by dividing the difference between the positional vectors by the TTC. It is clear from Formula (7) that the smaller the difference v2 - v1 between the velocity vectors of the two characteristic points compared to difference p2 - p1 between the positional vectors of the two characteristic points, the greater the TTC. That is, as shown in Figure 5, difference 5a between the velocity vectors in a set comprising two characteristic points 2b and 2i with the same TTC is computed. If difference 5a between the velocity vectors relative to distance 5b between the two points expressed by Formula (8) given below is smaller than a prescribed value, the set of characteristic points 2b and 2i with the same TTC can be determined to be characteristic points that are far away.

$$(dp2/dt - dp1/dt) / (p2 - p1) = v / L \qquad\qquad (8)$$

Therefore, the distant candidate group can be extracted by applying the processing to an arbitrary 2-characteristic point set within a characteristic point group with the same TTC to determine whether the characteristic group is far away. Here, there is a possibility that detected characteristic points of a nearby moving object, such as a preceding vehicle whose relative positional relationship with the vehicle does not change, may be included in the distant candidate group extracted through the processing. That is, because a moving object whose relative positional relationship with the vehicle does not change is never affected by the direction the vehicle travels, no difference in velocity is observed among detected characteristic point sets of such a moving object.

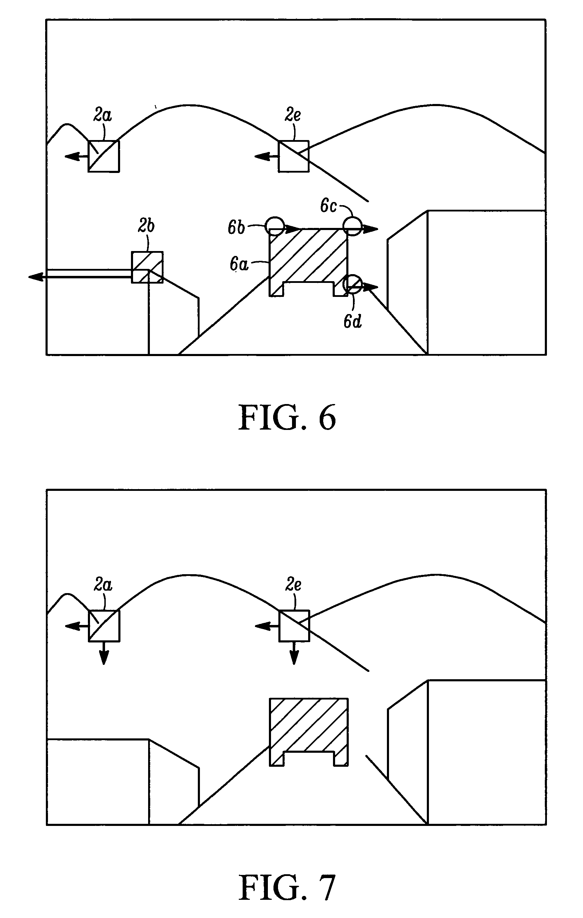

In addition, there is also a possibility that when the TTCs of a distant object and a nearby object match by coincidence during the grouping of characteristic points with the same TTCs, the characteristic point groups may be extracted as a distant characteristic group while the detected characteristic points of the nearby object are included therein. More specifically, as shown in Figure 6, a case in which a group comprising detected characteristic points 6b through 6d of preceding vehicle 6a is extracted as a distant candidate group, and a case in which detected characteristic point 2b of a nearby object is grouped into the same distant candidate group with 2a and 2e that are far away are both plausible.

In order to eliminate such erroneous extractions, the following processing is performed. First, in general, a nearby moving object is very likely to be present at a lower part of the image, for example, in the bottom third of the end of the image. Thus, characteristic points positioned in a specific range of area from the bottom end of the image are extracted from each respective distant candidate group, and pieces of velocity information regarding these characteristic points and pieces of velocity information regarding other characteristic points, that is, characteristic points present at an upper part of the image within the same distant candidate group are compared. As a result, if the pieces of velocity information regarding the characteristic points that are present at the lower part of the image and the pieces of velocity information regarding the other characteristic points within the same distant candidate group are identical, they are all determined to be nearby moving objects, and the entire group is deleted from the distant candidate group. As a result, the distant candidate group containing detected characteristic points 6b through 6d of preceding vehicle 6a in Figure 6 can be deleted.

However, if the pieces of velocity information regarding the characteristic points that are present at the lower part of the image and the pieces of velocity information regarding the other characteristic points within the same distant candidate group are different, a decision is made that only the characteristic points positioned at the lower part of the image are of a nearby moving object, and the other characteristic points are distant characteristic points. The characteristic points positioned at the lower part of the image are deleted from the distant candidate group. As a result, out of characteristic points 2a, 2b and 2e contained in the same distant candidate group, only characteristic point 2b detected of the nearby object can be deleted from the group. Here, although lateral movement velocities of the respective characteristic points are exemplified as image velocities to be compared in the example shown in Figure 6, the actual image velocities or longitudinal image velocities may also be used for comparison.

Only a distant candidate group containing distant characteristic points can be designated as a distant group through the described processing. Then, pitching and yawing of the vehicle are detected by measuring, or monitoring, the movement of the distant characteristic points contained in the designated distant group. That is, because the distant characteristic points are at sufficiently long distances L from the vehicle in comparison to distance $\Delta L$ that the vehicle travels forward, they are little affected in the image by the forward movement of the vehicle. Hence, the movement of distant characteristic points in the image can be considered attributable to pitching and yawing of the vehicle.

Accordingly, the movement of the distant points is measured based on the directions in which the characteristic points move and their moving velocities in order to detect the pitching and the yawing of the vehicle. For example, as shown in Figure 7, when distant characteristic points 2a and 2e move in the vertical direction in the image, a decision can be made that the vehicle is yawing sideways while pitching in the vertical direction.

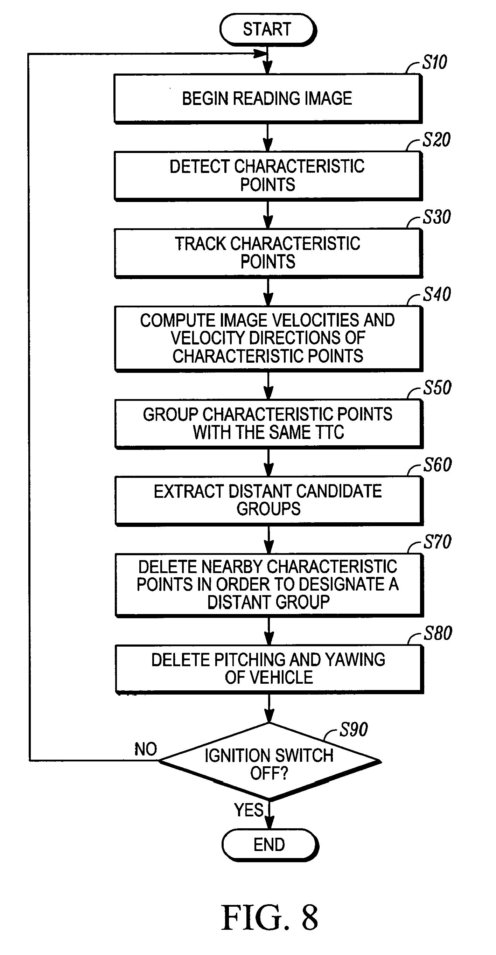

Figure 8 is a flow chart showing the processing carried out by vehicular behaviour detector 100. The processing shown in Figure 8 is executed by controller 103 using a program activated when vehicular behaviour detector 100 is powered via turning on the vehicle installed with vehicular behaviour detector 100 with an ignition switch (not shown). In step S10, the reading of an image captured continuously by camera 101 is initiated, and advancement is made to step S20. In step S20, edge extraction processing is applied to the read image in order to detect end-points of extracted edges as characteristic points. Subsequently, processing advances to step S30.

In step S30, as described above, tracking is applied to the respective detected characteristic points. Next, in step S40, the image velocities and velocity directions of the respective characteristic points in the image are computed based on the tracking results of the respective characteristic points. Subsequently, upon advancing to step S50, characteristic points with the same TTC are grouped based on the computed image velocities and the velocity directions as described above. Processing next advances to step S60, where the distant candidate groups are extracted from the grouped characteristic points with the same TTC.

In the next step, step S70, distant candidate groups comprising nearby characteristic points are deleted and/or nearby characteristic points are deleted from a distant candidate group containing nearby characteristic points in order to designate a distant characteristic point group. Subsequently, upon advancing to step S80, the movements of the characteristic points contained in the designated distant group are measured in order to detect the pitching and the yawing of the vehicle. Processing then advances to step S90.

In step S90, whether or not the ignition switch has been turned off is determined. If it is determined that the ignition switch has not been turned off, the processing is repeated upon returning to step S 10. In contrast, if a determination is made that the ignition switch has been turned off, the processing ends.

Accordingly, the following effects can be achieved. Characteristic points are detected within the pickup image, and only those which are far away (distant characteristic points) are extracted from the characteristic points. Then, the movements of the distant characteristic points are measured in order to detect the pitching and yawing of the vehicle. As a result, the pitching and yawing of the vehicle can be detected very accurately by monitoring the distant characteristic points that are little affected by the forward movement of the vehicle in the image.

In order to eliminate erroneous extraction of groups containing distant characteristic point candidates, that is, distant candidate groups, characteristic points that are present in a prescribed range of area from the bottom end of the image can be extracted. These characteristic points are determined to have been detected for a nearby object and are processed accordingly. As a result, detected characteristic points of a nearby object can be identified easily and very accurately based on the tendency for a nearby moving object to be normally present at a lower part of the image.

To eliminate erroneous extraction of distant candidate groups, when pieces of velocity information regarding characteristic points positioned within a prescribed range of area from the bottom end of the image are identical to pieces of velocity information regarding the other characteristic points within the same distant candidate group, a decision is made that they all represent a nearby moving object. Then, the entire group is deleted from the distant candidate group. As a result, a distant candidate group comprising detected characteristic points of a nearby object can be deleted reliably.

In addition to the foregoing, when pieces of velocity information regarding characteristic points positioned within a prescribed range of area from the bottom end of the image are different from pieces of velocity information regarding the other characteristic points within the same distant candidate group, a decision is made that only the characteristic points positioned at the lower part of the image are of a nearby moving object, and that the other characteristic points are distant characteristic points. This allows deletion of only the characteristic points positioned at the lower part of the image from the distant candidate group. As a result, when nearby characteristic points and distant characteristic points are contained in the same distant candidate group, only the nearby characteristic points are deleted from the group reliably.

Modifications of the features taught herein are also possible. For example, although an example in which the SAD technique is used for tracking the characteristic points was explained above, this does not impose a restriction. Other known techniques can be used to track the characteristic points.

The directions and the amount of movement of the characteristic points were computed above based on the positions of the characteristic points in the previous image and the positions of the characteristic points in the current image. Again, this does not impose a restriction. Image velocities of the characteristic points may be computed through the computation of known optical flow, for example.

As described herein, images in front of the vehicle are captured using camera 101, and the behaviour of the vehicle is detected based on the images in front of the vehicle. However, camera 101 can also be set to capture images behind the vehicle, and the behaviour of the vehicle can also be detected based on images captured behind the vehicle by camera 101.

This application claims priority from Japanese Patent Application No. 2005-161438, filed 1st June 2005, the contents of which are hereby incorporated by reference.

The present invention is not by any means restricted to the configuration of the aforementioned embodiment as long as the characteristic functionality of the present invention is not lost. More specifically, the above-described embodiments have been described in order to allow easy understanding of the present invention and do not limit the present invention. On the contrary, the invention is intended to cover various modifications and equivalent arrangements included within the scope of the appended claims, which scope is to be accorded the broadest interpretation so as to encompass all such modifications and equivalent structure as is permitted under the law.

**Claims**

1. An apparatus for detecting the behaviour of a vehicle, comprising:

   image pickup means for capturing a plurality of images outside the vehicle; and
   control means arranged to extract one or more characteristic points from each of the plurality of images, calculate movement of the or each characteristic point, compute a time until collision of the vehicle with the or each characteristic point based on the calculated movement thereof, designate certain of the characteristic points as distant characteristic points using the respective times until collision and determine behaviour of the vehicle in dependence on movement of the distant characteristic points.

2. An apparatus as claimed in claim 1 or claim 2 wherein the control means is arranged to separate characteristic points with identical times until collision into groups, designate characteristic points having a time until collision equal to or greater than a prescribed value out of the groups as candidates for the distant characteristic points and delete nearby characteristic points for objects present near the vehicle from the candidates, wherein remaining ones of the candidates are the distant characteristic points.

3. An apparatus as claimed in claim 1 or claim 2 wherein the nearby characteristic points comprise other candidates having the same movement information as the characteristic points present within the prescribed range from the bottom of the image that are candidates.

4. An apparatus as claimed in claim 3 wherein deleting nearby characteristic points further comprises designating characteristic points present within a prescribed range from the bottom end of the image that are candidates as the nearby characteristic points.

5. An apparatus as claimed in any preceding claim wherein the control means is arranged to determine movement information for characteristic points present within a prescribed range from a bottom end of an image and to determine movement information for characteristic points in an upper end of an image, wherein the nearby characteristic points deleted include characteristic points present within the prescribed range from the bottom end of the image when the movement information for the characteristic points is not equal to the movement information for the characteristic points in the upper end of the image and wherein the nearby characteristic points deleted include the characteristic points present within the prescribed range from the bottom end of the image and the characteristic points in the upper end of the image when the movement information for the characteristic points present within the prescribed range from the bottom end of the image is equal to the movement information for the characteristic points in the upper end of the image.

6. An apparatus as claimed in any preceding claim wherein the behaviour comprises at least one of a pitch and a yaw of the vehicle.

7. An apparatus as claimed in any preceding claim wherein the movement information comprises at least one of a velocity and a direction for each of the characteristic points.

8. A method of detecting behaviour of a vehicle, comprising:

   capturing a plurality of images outside the vehicle;
   extracting characteristic points from each of the plurality of images;
   computing movement information for the characteristic points moving through the plurality of images;
   computing a time until collision of the vehicle with each of the characteristic points based on the movement information; and
   designating certain of the characteristic points at distant positions from the vehicle as distant characteristic points using the respective times until collision; and
   determining behaviour of the vehicle in dependence on movement of the distant characteristic points.

9. A method as claimed in claim 8 wherein designating certain of the characteristic points as distant characteristic points further comprises separating the characteristic points having a same time until collision into respective groups, selecting at least one of the respective groups as a distant candidate group wherein the at least one of the respective groups has a time until collision equal to or greater than a prescribed value and deleting characteristic points for objects present near the vehicle from the distant candidate group; and wherein the remaining characteristic points of the distant candidate group are the distant characteristic points.

10. A method as claimed in claim 9 wherein deleting characteristic points for objects present near the vehicle from the distant candidate group comprises deleting characteristic points present within a prescribed range from a bottom end of an image from the distant candidate group.

11. A method as claimed in claim 10 comprising deleting characteristic points having a same movement information as the characteristic points present within the prescribed range from the bottom end of the image from the distant candidate group.

12. A vehicle having an apparatus or adapted to use a method as claimed in any preceding claim.

*100*

*101*

CAMERA

*101*

IMAGE
MEMORY

*103*

CONTROLLER

FIG. 1

FIG. 2

FIG. 3

FIG. 4

FIG. 5

FIG. 6

FIG. 7

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003051016 A

- JP 2005161438 A